# EUROPEAN PATENT APPLICATION

(11) **EP 4 706 913 A1**
(43) Date of publication of application: **11.03.2026**
(21) Application number: 24199295.7
(22) Date of filing: 09.09.2024
(51) Int. Cl.: B25J 15/00, B25J 9/04, B64F 1/32, B64F 1/36

(54) **A LUGGAGE CARRIER DEVICE**

(71) Applicant: Lifts All AB, 177 70 Järfälla (SE)
(72) Inventor: NYQUIST, Olov, 126 34 Hägersten (SE); KAIN, Joakim, 139 36 Värmdö (SE); HELIN, David, 741 30 Knivsta (SE); BARTOS, Elias, 141 38 Huddinge (SE); OLSSON, Maja, 112 40 Stockholm (SE)
(74) Representative: Zacco Sweden AB

(57) **Abstract**

A luggage carrier device (1) comprising a platform (2) having a generally planar upper surface (3) for supporting luggage that is to be carried on top of the platform (2). The luggage carrier device comprises at least one wheel (4), which is connected to the platform (2) and extends with its rotational axis along a lateral side (5) of the platform (2), wherein a periphery of the at least one wheel (4) protrudes above a level of said support surface (3).

## Description

### TECHNICAL FIELD

The present invention relates to a luggage carrier device comprising a platform having a generally planar upper surface for supporting luggage that is to be carried on top of the platform.

### BACKGROUND

Arrangements for moving luggage from a luggage conveyor to a container are well known and are typically used in air ports or the like. The arrangement typically has a fixed part and a moving part that comprises a platform on which luggage, typically bags, are positioned when being moved from the luggage conveyor to the container. The arrangement may typically have a plurality of arms, the motion of which is fully or partly controlled manually or by a control unit. The motion may comprise both a vertical motion and a horizontal motion.

According to some prior art, the platform comprises an end section that is pivotable between a first position in which it forms part of the upper flat surface of the platform and a second, raised position. The end section is also arranged so as to move along a rectilinear trajectory along the upper surface of the platform in order to push luggage positioned thereon off the platform. The provision of the pivotable and movable end section also adds complexity to the design and requires extra space.

According to some prior art, there is provided a platform formed by an endless belt arranged so as to move an object provided on the belt in the moving direction of the upper surface of the belt. The moving direction of the belt is a rectilinear direction.

It is an object of the present invention to present a luggage carrier device comprising a platform for moving luggage from a conveyor belt to a container, which device is relatively uncomplicated as to its design and which requires relatively little space for its functionality. The design of the platform should also be such that it enables motion of the luggage in a direction that deviates from a strictly rectilinear motion as the luggage is moved off from the platform.

### SUMMARY

The object of the invention is achieved by means of a luggage carrier device comprising a platform having a generally planar upper surface for supporting luggage that is to be carried on top of the platform, **characterised in** that the luggage carrier device comprises at least one wheel, which is connected to the platform and extends with its rotational axis along a lateral side of the platform, wherein a periphery of the at least one wheel protrudes above a level of said support surface.

According to some embodiments, the at least one wheel is an omniwheel. The provision of one or more omniwheels will enable luggage to move in a direction cross-wise to the moving direction of the rotational direction of the wheel. Omni wheels are wheels with small discs (called rollers) around the circumference which are perpendicular to the turning direction. The use of omniwheels will enable motion of luggage in different directions by the motion of the wheels.

According to some embodiments, the luggage carrier device further comprises a drive device for rotating the at least one wheel around its rotational axis.

According to some embodiments, the luggage carrier device further comprises a controller for controlling the operation of the drive device.

According to some embodiments, the luggage carrier device comprises a luggage detector for detecting luggage located on the support surface of the platform, and the controller is configured to stop the drive device from driving the at least one wheel when no luggage is detected by said detector on said support surface.

According to some embodiments, the luggage carrier device comprises a manual control element connected to the drive device and configured to enable manual control by an operator of the operation of the drive device, wherein the controller is configured to disable manual control of the drive device by means of the manual control element when no luggage is detected by said detector on said support surface. Accordingly, the controller order signal overhauls the operator-generated signal.

According to some embodiments, the luggage carrier device comprises a manual control element provided on a handle, or handlebar, which is connected to the platform for manual operation of the platform.

According to some embodiments, the luggage carrier device further comprises a plurality of first arms and at least one second arm, each first arm being connected to a neighbouring second arm through a hinge, each hinge comprising
- a first part fixedly connected to the first arm and
- a second part fixedly connected to the second arm, and
- each pair of a first part and a second part of a hinge being rotably arranged in relation to each other around a rotational axis which is generally perpendicular to a longitudinal axis of the respective first and second arm connected by the hinge, wherein an arm that defines a distal end of the arm arrangement forms or is fixedly to connected to the platform.

According to some embodiments, the luggage carrier device comprises an arm arrangement holder configured to be in a fixed position in a vertical direction, and that the arm arrangement is connected to said holder, wherein the luggage carrier device further comprises a drive unit for moving the arm arrangement in a vertical direction in relation to said holder.

According to some embodiments, the luggage carrier device comprises a manual control element for controlling the operation of the drive unit for moving the arm arrangement in a vertical direction in relation to said holder.

According to some embodiments, at least one of the hinges comprises a locking device for locking against rotation between the first part and the second part of that hinge.

According to some embodiments, the luggage carrier device comprises a sensor for detecting a predetermined operative condition of the arm arrangement and a control unit, which is configured to control the locking device on basis of input from the sensor.

According to some embodiments, the platform comprises a manual grip element to be held by an operator during operation of the arrangement, wherein said predetermined condition is a condition in which an operator grips the manual element, and wherein the control unit is arranged to make the locking device unlock against rotation between the first part and the second part of said hinge as a response to the detection of said predetermined condition by the sensor. According to some embodiments, the sensor for detecting the predetermined operative condition of the arm arrangement comprises a light sensor arranged such that presence of an operator hand on the handlebar will be registered by the sensor.

### BRIEF DESCRIPTION OF THE DRAWINGS

Embodiments of the present invention will now be described with reference to the drawing, on which,

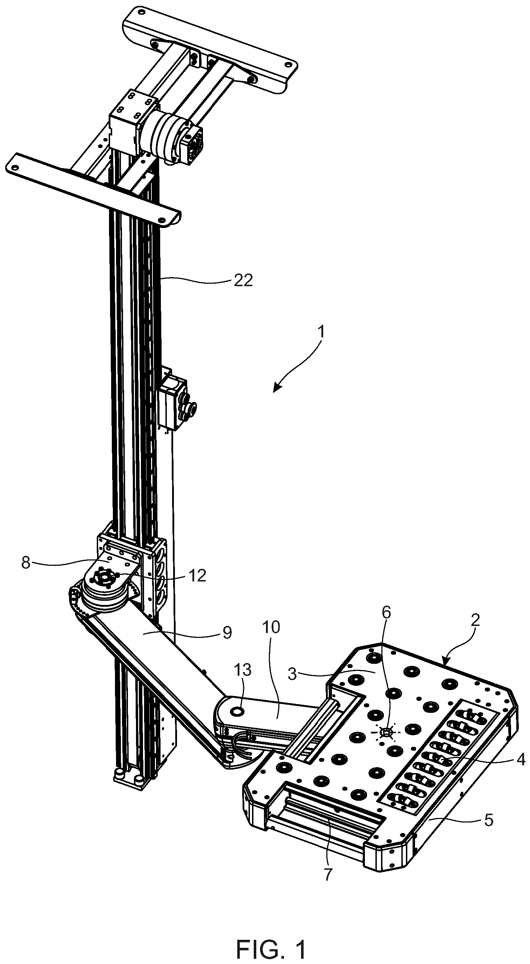

Fig. 1 is a perspective view from above of an embodiment of a luggage carrier device according to the invention,

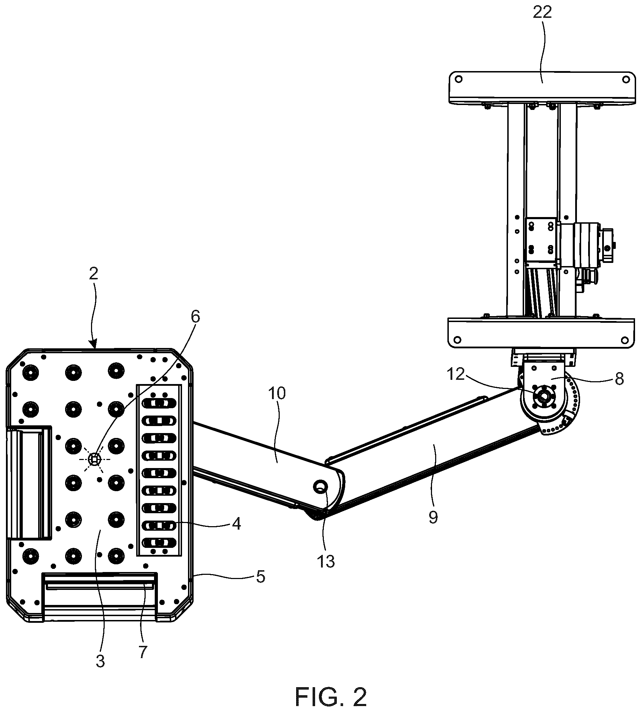

Fig. 2 is a view from above of the luggage carrier device shown in fig. 1, in a first position,

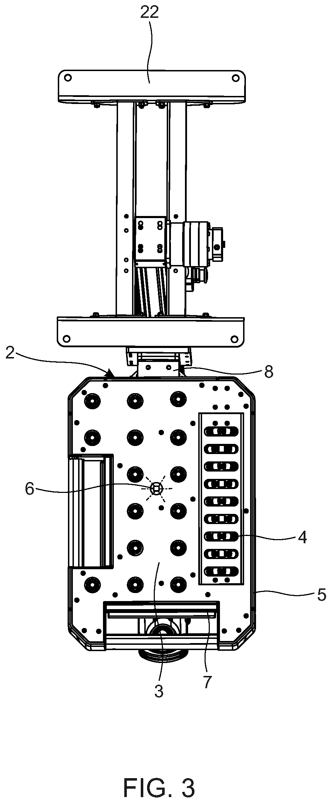

Fig. 3 is a view from above of the luggage carrier device shown in fig. 1, in a second position,

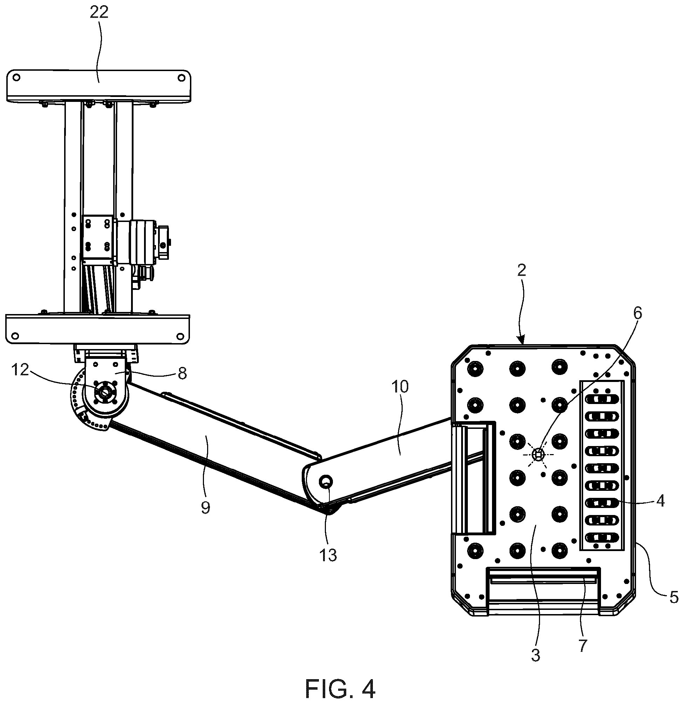

Fig. 4 is a view from above of the luggage carrier device shown in fig. 1, in a third position,

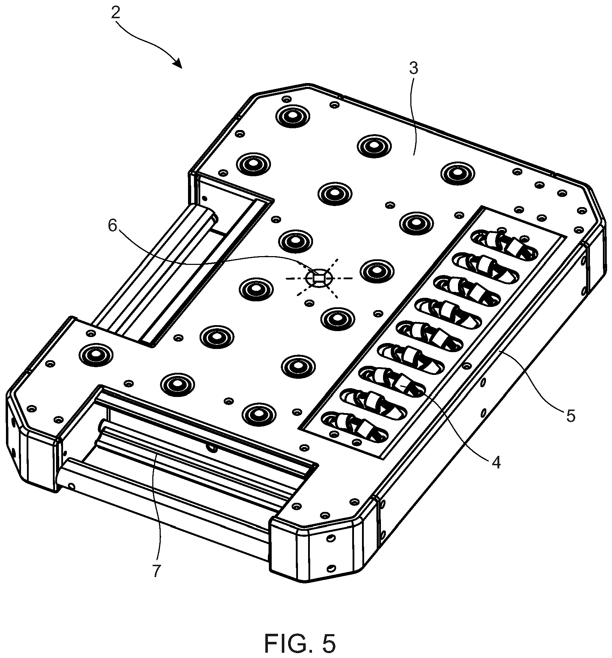

Fig. 5 is a perspective view of platform that forms part of the luggage carrier device shown in figs. 1-4, and

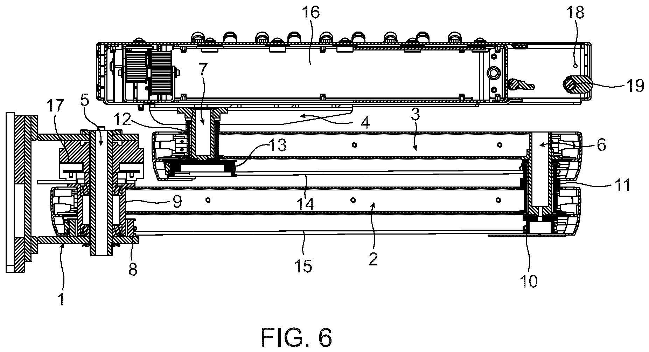

Fig. 6 is a cross section through a part of the luggage carrier device shown in figs. 1-5.

### DETAILED DESCRIPTION

The drawing shows an embodiment of the luggage carrier device 1 according to the invention. The luggage carrier device 1 comprises a platform 2 having a generally planar upper surface 3 for supporting luggage that is to be carried on top of the platform 2. The luggage carrier device further comprises a plurality of wheels 4, which are connected to the platform 2 and extend with a common rotational axis along a lateral side 5 of the platform 2. The periphery of each wheel 4 protrudes above a level of said support surface 3. Each wheel 4 is an omniwheel.

The luggage carrier device further comprises a drive device not shown for rotating the at least one wheel 4 around its rotational axis, and a controller not shown for controlling the operation of the drive device. The controller may also be referred to as a control unit.

The luggage carrier device further comprises a luggage detector 6 for detecting luggage located on the support surface 3 of the platform 2. The controller is configured to stop the drive device from driving the at least one wheel 4 when no luggage is detected by said detector 6 on said support surface 3.

The luggage carrier device also comprises a manual control element 7 connected to the drive device and configured to enable manual control by an operator of the operation of the drive device, wherein the controller is configured to disable manual control of the drive device by means of the manual control element 7 when no luggage is detected by said detector 6 on said support surface 3.

A manual control element 7 is provided on a handle which is connected to the platform 2 for manual operation of the platform 2.

An arm arrangement is provided, which arm arrangement comprises a plurality of first arms 8, 10 and at least one second arm 9, 11. Each first arm 8, 10 is connected to a neighbouring second arm 9, 11 through a hinge 12, 13, 14. Each hinge 12, 13, 14 comprises a first part 15, 16, 17 fixedly connected to the first arm 8, 10, and a second part 18, 19, 20 fixedly connected to the second arm 9, 11. Each pair of a first part 15, 16, 17 and a second part 18, 19, 20 of a hinge 12, 13, 14 is rotably arranged in relation to each other around a rotational axis which is generally perpendicular to a longitudinal axis of the respective first and second arm 8, 9, 10, 11 connected by the hinge 12, 13, 14. An arm 11 that defines a distal end of the arm arrangement forms or is fixedly connected to the platform 2. The first and second arms are thus arranged in series.

The luggage carrier device 1 also comprises an arm arrangement holder 22 configured to be in a fixed position in a vertical direction, and the arm arrangement is connected to said holder 22. The luggage carrier device 1 further comprises a drive unit not shown for moving the arm arrangement in a vertical direction in relation to said holder 22.

A manual control element 23 is provided for controlling the operation of the drive unit for moving the arm arrangement in a vertical direction in relation to said holder 22.

One of the hinges 12 comprises a locking device 24 for locking against rotation between the first part 15 and the second part 18 of that hinge 12.

There is also provided a sensor 25, here a light sensor, for detecting a predetermined operative condition of the arm arrangement and a control unit, which is configured to control the locking device 24 on basis of input from the sensor 25

The platform 2 comprises a manual grip element 26 to be held by an operator during operation of the arrangement, and said predetermined condition is a condition in which an operator grips the manual element 26. The control unit is arranged to make the locking device 24 unlock against rotation between the first part 15 and the second part 18 of said hinge 12 as a response to the detection of said predetermined condition by the sensor 25.

## Claims

1. A luggage carrier device (1) comprising a platform (2) having a generally planar upper surface (3) for supporting luggage that is to be carried on top of the platform (2), **characterised in that** the luggage carrier device comprises at least one wheel (4), which is connected to the platform (2) and extends with its rotational axis along a lateral side (5) of the platform (2), wherein a periphery of the at least one wheel (4) protrudes above a level of said support surface (3).

2. A luggage carrier device according to claim 1, **wherein** the at least one wheel (4) is an omniwheel.

3. A luggage carrier device according to claim 1 or 2, **characterised in that** it further comprises a drive device for rotating the at least one wheel (4) around its rotational axis.

4. A luggage carrier device according to claim 3, **characterised in that** it further comprises a controller for controlling the operation of the drive device.

5. A luggage carrier device according to claim 4, **characterised in that** it comprises a luggage detector (6) for detecting luggage located on the support surface (3) of the platform (2), and that the controller is configured to stop the drive device from driving the at least one wheel (4) when no luggage is detected by said detector (6) on said support surface (3).

6. A luggage carrier device according to claim 5, **characterised in that** it comprises a manual control element (7) connected to the drive device and configured to enable manual control by an operator of the operation of the drive device, wherein the controller is configured to disable manual control of the drive device by means of the manual control element (7) when no luggage is detected by said detector (6) on said support surface (3).

7. A luggage carrier device according to any one of claims 1-6, **characterised in that** it comprises a manual control element (7) provided on a handle which is connected to the platform (2) for manual operation of the platform (2).

8. A luggage carrier device according to any one of claims 1-7, **characterised in that** it further comprises an arm arrangement comprising a plurality of first arms (8, 10) and at least one second arm (9, 11), each first arm (8, 10) being connected to a neighbouring second arm (9, 11) through a hinge (12, 13, 14), each hinge (12, 13, 14) comprising
- a first part (15, 16, 17) fixedly connected to the first arm (, and
- a second part (18, 19, 20) fixedly connected to the second arm (9, 11), and
- each pair of a first part (15, 16, 17) and a second part (18, 19, 20) of a hinge (12, 13, 14) being rotably arranged in relation to each other around a rotational axis which is generally perpendicular to a longitudinal axis of the respective first and second arm (8, 9, 10, 11) connected by the hinge (12, 13, 14), wherein an arm (11) that defines a distal end of the arm arrangement forms or is fixedly to connected to the platform (2).

9. A luggage carrier device according to claim 8, **characterised in that** it comprises an arm arrangement holder (22) configured to be in a fixed position in a vertical direction, and that the arm arrangement is connected to said holder (22), wherein the luggage carrier device (1) further comprises a drive unit for moving the arm arrangement in a vertical direction in relation to said holder (22).

10. A luggage carrier device according to claim 9, **characterised in that** it comprises a manual control element (23) for controlling the operation of the drive unit for moving the arm arrangement in a vertical direction in relation to said holder (22).

11. A luggage carrier device according to any one of claims 8-10, **characterised in that** at least one of the hinges (12) comprises a locking device (23) for locking against rotation between the first part (15) and the second part (18) of that hinge (12).

12. A luggage carrier device according to claim 11, **characterised in that** it comprises a sensor (24) for detecting a predetermined operative condition of the arm arrangement and a control unit, which is configured to control the locking device on basis of input from the sensor (24)

13. A luggage carrier device according to claim 12, **characterised in that** the platform (2) comprises a manual grip element (25) to be held by an operator during operation of the arrangement, and that said predetermined condition is a condition in which an operator grips the manual element (25), and that the control unit is arranged to make the locking device (23) unlock against rotation between the first part (15) and the second part (18) of said hinge (12) as a response to the detection of said predetermined condition by the sensor (24).
